# FASCICULE DE BREVET EUROPEEN

(11) **EP 2 788 396 B1**
(45) Date de publication et mention de la délivrance du brevet: **07.10.2015**
(21) Numéro de dépôt: 12795805.6
(22) Date de dépôt: 04.12.2012
(51) Int. Cl.: C08F 283/00, C08L 81/06, C09J 4/06

(54) **COMPOSITIONS DURCISSABLES PERMETTANT D'OBTENIR DES MATERIAUX AU COMPORTEMENT OPTIMISE ET MATERIAUX OBTENUS A PARTIR DE CES COMPOSITIONS**
HÄRTBARE ZUSAMMENSETZUNGEN ZUR HERSTELLUNG VON MATERIALIEN MIT OPTIMIERTER LEISTUNG UND AUS DIESEN ZUSAMMENSETZUNGEN HERGESTELLTE MATERIALIEN
CURABLE COMPOSITIONS THAT CAN BE USED TO OBTAIN MATERIALS HAVING AN OPTIMISED PERFORMANCE, AND MATERIALS OBTAINED FROM SAID COMPOSITIONS

(30) Priorité: 05.12.2011 FR 1161154
(43) Date de publication de la demande: 15.10.2014
(73) Titulaire: Airbus Defence and Space SAS, 78130 Les Mureaux (FR); Université De Reims Champagne-Ardenne, 51097 Reims Cedex (FR); Centre National de la Recherche Scientifique, 75016 Paris (FR)
(72) Inventeur: COQUERET, Xavier, F-51100 Reims (FR); KRZEMINSKI, Mickael, F-33110 Le Bouscat (FR); DEFOORT, Brigitte, F-33160 Saint Medard en Jalles (FR)
(74) Mandataire: Ahner, Philippe
(86) Numéro de dépôt international: PCT/EP2012/074367
(87) Numéro de publication internationale: WO 2013/083567

(56) Documents cités:
- FR-A1- 2 951 179
- DATABASE WPI Week 200220 Thomson Scientific, London, GB; AN 2002-151753 XP002682858, & JP 2001 329027 A (ZH KAWAMURA RIKAGAKU KENKYUSHO) 27 novembre 2001 (2001-11-27)

## Description

### DOMAINE TECHNIQUE

La présente invention se rapporte au domaine des compositions durcissables à usage industriel.

Plus spécifiquement, elle se rapporte à une composition durcissable propre à conduire, après durcissement, à des matériaux qui offrent un excellent compromis entre ténacité, tenue aux températures élevées et tenue à l'humidité.

Elle se rapporte également à un matériau obtenu par durcissement de cette composition.

Ce matériau peut notamment être un matériau formant la matrice d'un matériau composite.

Toutefois, il peut également être un matériau adhésif assurant l'assemblage de pièces entre elles et, en particulier, de pièces en matériaux composites.

L'invention est donc susceptible de trouver des applications dans toutes sortes d'industrie et, plus spécialement, dans les industries aéronautique, spatiale, ferroviaire, navale et automobile, par exemple pour la fabrication et l'assemblage de pièces de structure, de pièces de moteur, de pièces d'habitacle ou de pièces de carrosserie, dans l'industrie de l'armement, par exemple pour la fabrication et l'assemblage de missiles ou de tubes lance-missiles, ou encore dans le domaine des loisirs et des sports, par exemple pour la fabrication et l'assemblage d'articles destinés aux sports nautiques et aux sports de glisse.

### ÉTAT DE LA TECHNIQUE ANTÉRIEURE

Les matériaux composites permettent d'exploiter les propriétés mécaniques exceptionnelles de certains matériaux que l'on ne sait pas fabriquer sous forme massive, mais seulement sous forme de filaments. On utilise alors des matrices formées de polymères organiques pour lier les filaments entre eux.

Ces matrices sont typiquement obtenues à partir de compositions qui sont classiquement appelées « *résines thermodurcissables* » (bien qu'un certain nombre d'entre elles puissent être durcies sous l'effet d'un traitement autre que la chaleur) et qui comprennent des monomères, oligomères et/ou des prépolymères capables de conduire par polymérisation/ réticulation à la formation d'un matériau infusible et insoluble.

Si l'on veut obtenir des matériaux composites à hautes performances, il est indispensable que les matrices aient elles-mêmes de bonnes propriétés mécaniques.

Or, d'une façon générale, les matrices obtenues à partir de résines thermodurcissables et, en particulier, à partir de résines vinylesters, présentent une ténacité, c'est-à-dire une résistance aux chocs, médiocre.

Il a été proposé un certain nombre de solutions pour améliorer la ténacité d'un matériau composite dont la matrice est obtenue à partir d'une résine vinylester.

En particulier, il a été proposé dans la demande internationale PCT publiée sous le numéro WO 2011/042554 (référence **[1]**) d'incorporer, dans une composition durcissable comprenant un monomère vinylester, un polymère thermoplastique polyaromatique sulfoné en dissolvant ce monomère et ce polymère dans un diluant réactif dans lequel ils sont tous les deux solubles, par exemple un *N*-vinyl lactame. Il est ainsi possible d'obtenir des matériaux qui présentent une ténacité supérieure à 2,20 MPa.m^{1/2}, ce qui était jusque là considéré comme impossible dans le domaine des matériaux à base de résines vinylesters.

Cependant, dans l'élaboration d'un matériau composite, la ténacité n'est pas le seul critère à prendre en compte.

En effet, il faut également tenir compte de l'évolution du matériau dans son environnement et, en particulier, de sa tenue aux températures élevées, par exemple dans le cas où ce matériau est destiné à être utilisé pour la fabrication de pièces de structures ou de moteurs d'avions ou de fusées, et spatiale, et de sa tenue à l'humidité.

Il faut en outre tenir compte de la facilité de mise en oeuvre du matériau à une échelle industrielle et, en particulier, de la viscosité que présente la composition durcissable aux températures auxquelles ce matériau va être mis en oeuvre. Ainsi, par exemple, dans le cas d'une mise en oeuvre industrielle d'un matériau composite impliquant une opération d'injection, cette mise en oeuvre est d'autant plus contraignante que la composition durcissable a une viscosité élevée et nécessite, de ce fait, d'être portée à des températures élevées pour rendre sa viscosité compatible avec une injection.

Or, l'expérience prouve qu'il est extrêmement difficile d'obtenir à partir de résines vinylesters des matériaux présentant des propriétés très satisfaisantes à la fois en termes de ténacité, de tenue aux températures élevées et de tenue à l'humidité car, lorsque l'une des propriétés d'un matériau, comme la ténacité, est améliorée par l'addition aux résines d'un constituant supplémentaire, une autre des propriétés de ce matériau est généralement dégradée.

Les Inventeurs se sont donc fixé pour but de fournir des compositions durcissables à base d'une résine vinylester, qui permettent, après durcissement, d'obtenir des matériaux qui offrent un excellent compromis entre ténacité, tenue aux températures élevées et tenue à l'humidité.

Ils se sont de plus fixé pour but que ces compositions durcissables aient une viscosité qui permette de mettre en oeuvre facilement des matériaux composites à une échelle industrielle, y compris par des techniques impliquant une opération d'injection comme, par exemple, le moulage par injection simultanée ou le moulage par injection basse pression de résine.

Ils se sont en outre fixé pour but que ces compositions durcissables puissent être préparées en utilisant uniquement des composants commercialement disponibles.

### EXPOSÉ DE L'INVENTION

Ces buts sont atteints par l'invention qui propose une composition durcissable qui comprend un composé polymérisable vinylester, conjointement avec un polymère thermoplastique polyaromatique sulfoné et un *N*-vinyl lactame, et qui est caractérisée en ce qu'elle comprend de plus :
- un premier composé polymérisable non vinylester, ou composé 1, qui comprend au moins un groupe isocyanurate porteur d'au moins deux groupes (méth)acrylate ; et
- un deuxième composé polymérisable non vinylester, ou composé 2, qui comprend au moins un groupe carbopolycyclique ou hétéropolycyclique porteur d'au moins deux groupes (méth)acrylate.

Dans ce qui précède et ce qui suit, on entend par « *composé polymérisable* », un composé qui est capable de subir une réaction de polymérisation/ réticulation grâce à la présence d'au moins deux sites réactifs qu'il comporte, et ce que ce soit sous l'effet de la chaleur, de la lumière (lumière visible, UV ou IR), d'un rayonnement ionisant (faisceau d'électrons, rayonnement β ou γ, rayons X, ...), d'une réaction d'oxydoréduction ou de tout autre moyen. Ce composé peut donc se présenter sous la forme d'un monomère, d'un oligomère ou d'un prépolymère résultant de la polymérisation de ce monomère, ou encore sous la forme d'un mélange de ceux-ci.

On entend par « *composé vinylester* », un monomère qui a été obtenu par la réaction entre un composé époxyde et un acide carboxylique insaturé (typiquement l'acide acrylique ou l'acide méthacrylique), ou bien un oligomère ou un prépolymère résultant de la polymérisation de ce monomère, ou encore un mélange de ceux-ci. De tels composés, qui sont également connus sous le nom de « *composés époxyvinylesters* », sont notamment décrits dans la monographie intitulée « *Résines vinylesters* » des Techniques de l'Ingénieur, Traité Plastiques et Composites, volume AM 3450 (référence **[2]**).

Par ailleurs, on entend par « *groupe carbopolycyclique* », un groupe dont la partie cyclique est formée par au moins deux cycles condensés et dont les cycles sont composés uniquement d'atomes de carbone, alors que l'on entend par « *groupe hétéropolycyclique* », un groupe dont la partie cyclique est formée par au moins deux cycles condensés dont l'un au moins comprend au moins un hétéroatome, c'est-à-dire un atome autre qu'un atome de carbone, typiquement choisi parmi l'azote, l'oxygène et le soufre.

Quant à l'expression « *groupe (méth)acrylate* », elle désigne aussi bien un groupe acrylate qu'un groupe méthacrylate, c'est-à-dire un groupe de formule : -OC(O)-C(R)=CH₂ dans laquelle R peut aussi bien être un atome d'hydrogène qu'un groupe méthyle.

Conformément à l'invention, le composé polymérisable vinylester comprend préférentiellement au moins un motif bisphénolique A et/ou un motif novolaque et est donc, de préférence, choisi parmi :
- les résines vinylesters de bisphénol A comme, par exemple, celles commercialisées par la société SARTOMER sous la référence SR 601E, par la société CYTEC sous la référence Ebecryl™ 600 ;
- les résines vinylesters de bisphénol A halogénés comme, par exemple, celles commercialisées par la société DOW Chemicals sous les références Derakane™ DER 510A-40 et 510C-350 ;
- les résines vinylesters novolaques comme, par exemple, celle commercialisée par la société CYTEC sous la référence Ebecryl™ 609 ; et
- les résines vinylesters mixtes, comprenant à la fois des motifs bisphénolique A et des motifs novolaque comme, par exemple, celle commercialisée par la société DSM Composite Resins sous la référence Atlac™ 430.

Toutefois, il peut également s'agir d'un composé polymérisable vinylester qui ne comprend ni motif bisphénolique A ni motif novolaque comme, par exemple, une résine uréthane acrylate.

De manière préférée entre toutes, le composé polymérisable vinylester est un monomère diacrylate de bisphénol A époxydé de formule (I) ci-après : 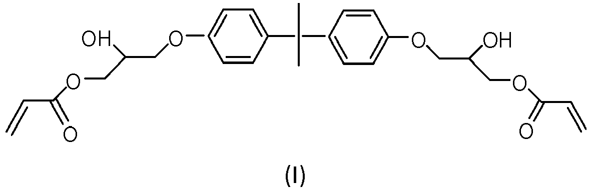 ou un oligomère ou un prépolymère résultant d'une polymérisation de ce monomère, ou encore un mélange de ceux-ci. Un tel composé est notamment disponible auprès de la société CYTEC sous la référence Ebecryl™ 600.

Le polymère thermoplastique aromatique sulfoné est, de préférence, choisi parmi les polysulfones, les polyéthersulfones et les polyphénylsulfones comme, par exemple, celles commercialisées par la société SOLVAY Advanced Polymers sous les références Udel™ (pour les polysulfones), Veradel™ et Virantage™ (pour les polyéthersulfones) et Radel™ (pour les polyphénylsulfones).

Parmi ces polymères, les polyéthersulfones comme, par exemple, celle commercialisée par la société SOLVAY Advanced Polymers sous la référence Virantage™ VW-10700 RFP, sont particulièrement préférées.

Le *N*-vinyl lactame est, de préférence, choisi parmi la N-vinyl-2-pyrrolidone, la *N*-vinyl-2-pipéridone et le *N*-vinyl caprolactame, la *N*-vinyl-2-pyrrolidone étant tout particulièrement préférée.

Par ailleurs, le composé 1 est, de préférence, le monomère de formule (II) ci-après : 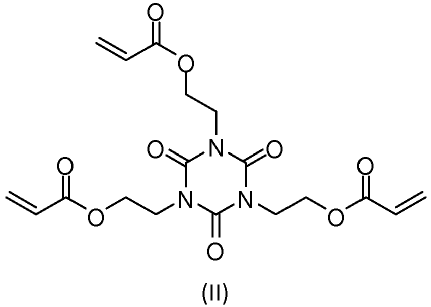 ou un oligomère ou un prépolymère résultant d'une polymérisation de ce monomère, ou encore un mélange de ceux-ci. Ce monomère est connu sous le nom de *tris-(2-*hydroxyéthyle)isocyanurate triacrylate et est disponible auprès de la société SARTOMER sous la référence SR 368.

Quant au composé 2, il est, lui, de préférence un monomère de formule (III) ci-après : 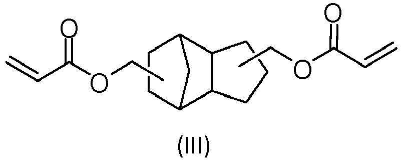 ou un oligomère ou un prépolymère résultant d'une polymérisation de ce monomère, ou encore un mélange de ceux-ci. Ce monomère est connu sous le nom de tricyclodécane diméthanoldiacrylate et est disponible auprès de la société SARTOMER sous la référence SR 833S.

Dans un mode de réalisation préféré de l'invention, la composition durcissable présente la formulation qualitative et quantitative suivante, exprimée en pourcentages massiques :
- 33 ± 5% du monomère diacrylate de bisphénol A époxydé de formule (I) ci-avant ou d'un oligomère ou d'un prépolymère résultant d'une polymérisation de ce monomère, ou encore d'un mélange de ceux-ci ;
- 10 ± 3% d'une polyéthersulfone ;
- 15 ± 3% de *N*-vinyl-2-pyrrolidone ;
- 40 ± 5% du monomère de formule (II) ci-avant ou d'un oligomère ou d'un prépolymère résultant d'une polymérisation de ce monomère, ou encore d'un mélange de ceux-ci ; et
- 2 ± 1,5% du monomère de formule (III) ci-avant ou d'un oligomère ou d'un prépolymère résultant d'une polymérisation de ce monomère, ou encore d'un mélange de ceux-ci.

Mieux encore, la composition durcissable présente la formulation qualitative et quantitative suivante, exprimée en pourcentages massiques :
- 33 ± 1% du monomère diacrylate de bisphénol A époxydé de formule (I) ci-avant ou d'un oligomère ou d'un prépolymère résultant d'une polymérisation de ce monomère, ou encore d'un mélange de ceux-ci ;
- 10 ± 1% d'une polyéthersulfone ;
- 15 ± 1% de *N*-vinyl-2-pyrrolidone ;
- 40 ± 1% du monomère de formule (II) ci-avant ou d'un oligomère ou d'un prépolymère résultant d'une polymérisation de ce monomère, ou encore d'un mélange de ceux-ci ; et
- 2 ± 1% du monomère de formule (III) ci-avant ou d'un oligomère ou d'un prépolymère résultant d'une polymérisation de ce monomère, ou encore d'un mélange de ceux-ci.

Une telle composition durcissable conduit, en effet, après durcissement, à un matériau qui offre un excellent compromis entre ténacité, tenue aux températures élevées et tenue à l'humidité puisqu'il présente à la fois une ténacité supérieure à 1,4 MPa.m^{1/2} (telle que déterminée par la norme ISO 13586:2000), une température de transition vitreuse supérieure à 180°C et une sensibilité à l'humidité modérée.

En outre, elle présente une viscosité qui permet d'envisager son utilisation dans de nombreuses techniques utilisées pour la mise en oeuvre industrielle des matériaux composites et, notamment, celles impliquant une opération d'injection.

L'invention a aussi pour objet un matériau qui est caractérisé en ce qu'il est obtenu par durcissement d'une composition durcissable telle que précédemment définie.

Conformément à l'invention, ce matériau est, de préférence, soit un adhésif assurant l'assemblage de pièces entre elles et, en particulier, de pièces en matériau(x) composite(s), soit un matériau formant la matrice d'un matériau composite du type comprenant une matrice dans laquelle se trouve un renfort.

Le renfort présent dans ce matériau composite peut être de différents types. Ainsi, il peut notamment s'agir d'un renfort constitué de fibres de verre, de fibres de quartz, de fibres de carbone, de fibres de graphite, de fibres de silice, de fibres métalliques comme des fibres d'acier, des fibres d'aluminium ou des fibres de bore, de fibres organiques comme les fibres d'aramide, les fibres de polyéthylène, les fibres de polyester ou les fibres de poly(*p*-phénylène benzobisoxazole), plus connues sous le sigle PBO, ou encore de fibres de carbure de silicium.

Ce renfort peut se présenter, selon la nature des fibres qui le constituent, sous la forme de fils coupés, de fibres broyées, de mats à filaments continus, de mats à filaments coupés, de stratifils (ou « *rovings* » en langue anglaise), de tissus, de tricots, de feutres, ..., ou encore sous la forme de complexes réalisés par association de différents types de matériaux plans.

Par ailleurs, la fabrication du matériau composite peut être réalisée par toutes les techniques connues de l'homme du métier des matériaux composites comme, par exemple, par imprégnation, par moulage par injection simultanée, par moulage par drapage autoclavé, par moulage sous vide, par moulage par injection basse pression de résine (ou RTM pour « *Resin Transfert Molding* »), par moulage à la presse à froid *"voie humide"* basse pression, par moulage par injection de compound (ou BMC pour « *Bulk Molding Compound* »), par moulage par compression de mats préimprégnés (ou SMC pour « *Sheet Molding Compound* »), par enroulement filamentaire, par centrifugation ou encore par pultrusion.

L'invention a encore pour objet un matériau composite, qui comprend une matrice dans laquelle se trouve un renfort, et qui est caractérisé en ce la matrice est obtenue par durcissement d'une composition durcissable telle que précédemment définie.

L'invention sera mieux comprise à la lecture du complément de description qui suit, qui présente la démarche suivie par les Inventeurs pour développer une composition durcissable propre à conduire, après durcissement, à un matériau au comportement optimisé en termes de ténacité, de tenue aux températures élevées et de tenue à l'humidité.

Ce complément de description est donné en référence aux figures annexées.

Il va de soi qu'il ne représente qu'une illustration de l'objet de l'invention et qu'il ne vise en aucun cas à limiter cet objet.

Dans ce qui suit :
- le sigle PES désigne la polyéthersulfone qui est commercialisée par la société SOLVAY Advanced Polymers sous la référence Virantage™ VW-10700 RFP ;
- le sigle NVP désigne la *N*-vinyl-2-pyrrolidone ;
- l'acronyme EPAC désigne l'oligomère diacrylate de bisphénol A époxydé qui est commercialisé par la société CYTEC sous la référence Ebecryl™ 600 ;
- le sigle TTHEC désigne le monomère *tris*-(2-hydroxyéthyle) isocyanurate triacrylate qui est commercialisé par la société SARTOMER sous la référence SR 368 ; tandis que
- le sigle DTCD désigne le monomère tricyclodécane diméthanoldiacrylate qui est commercialisé par la société SARTOMER sous la référence SR 833S.

### BRÈVE DESCRIPTION DES FIGURES

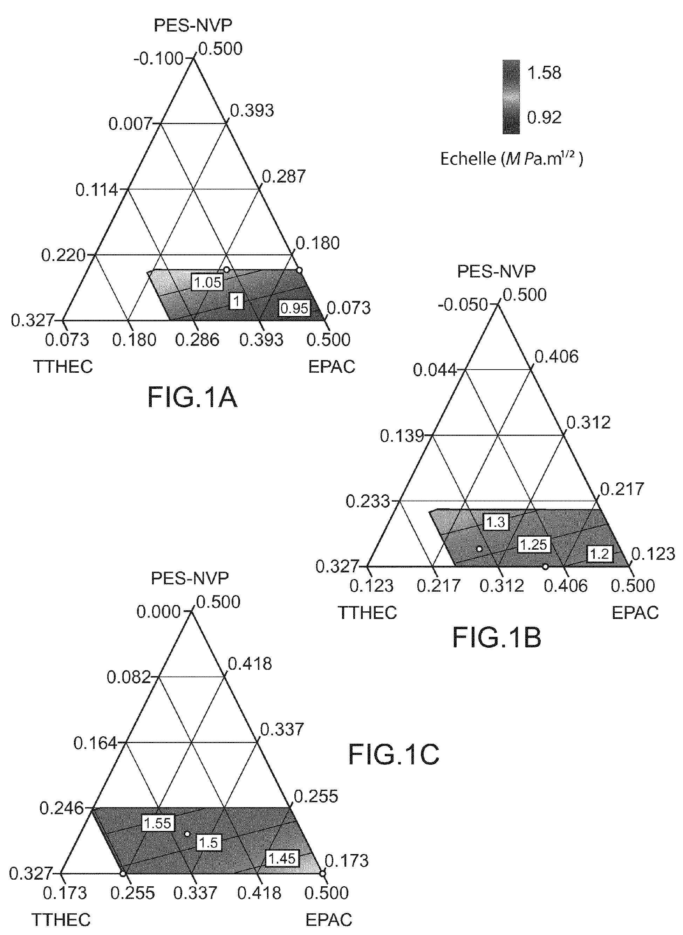

Les figures 1A, 1B et 1C montrent les projections, à fraction massique en DTCD fixée, sur des diagrammes ternaires PES-NVP/EPAC/TTHEC de la surface de réponse de la ténacité de matériaux obtenus à partir de compositions durcissables composées d'un mélange PES/NVP/EPAC/TTHEC/DTCD ; la figure 1A correspond à une fraction massique en DTCD de 0,10 ; la figure 1B correspond à une fraction massique en DTCD de 0,05 tandis que la figure 1C correspond à une fraction massique en DTCD de 0,00.

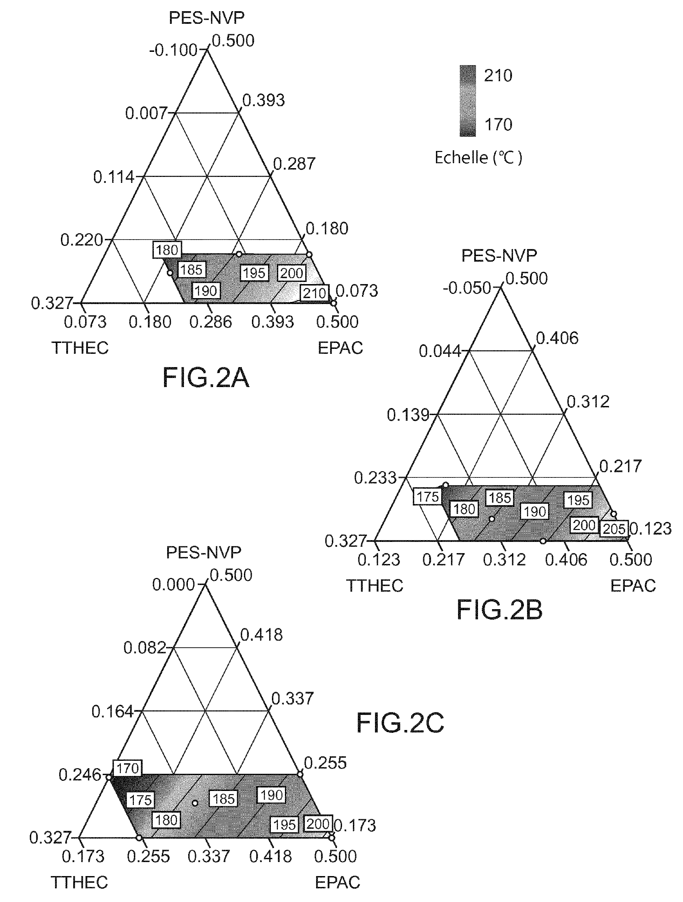

Les figures 2A, 2B et 2C montrent les projections, à fraction massique en DTCD fixée, sur des diagrammes ternaires PES-NVP/EPAC/TTHEC de la surface de réponse de la température de transition vitreuse de matériaux obtenus à partir de compositions durcissables composées d'un mélange PES/NVP/EPAC/TTHEC/DTCD ; la figure 2A correspond à une fraction massique en DTCD de 0,10; la figure 2B correspond à une fraction massique en DTCD de 0,050 tandis que la figure 2C correspond à une fraction massique en DTCD de 0,00.

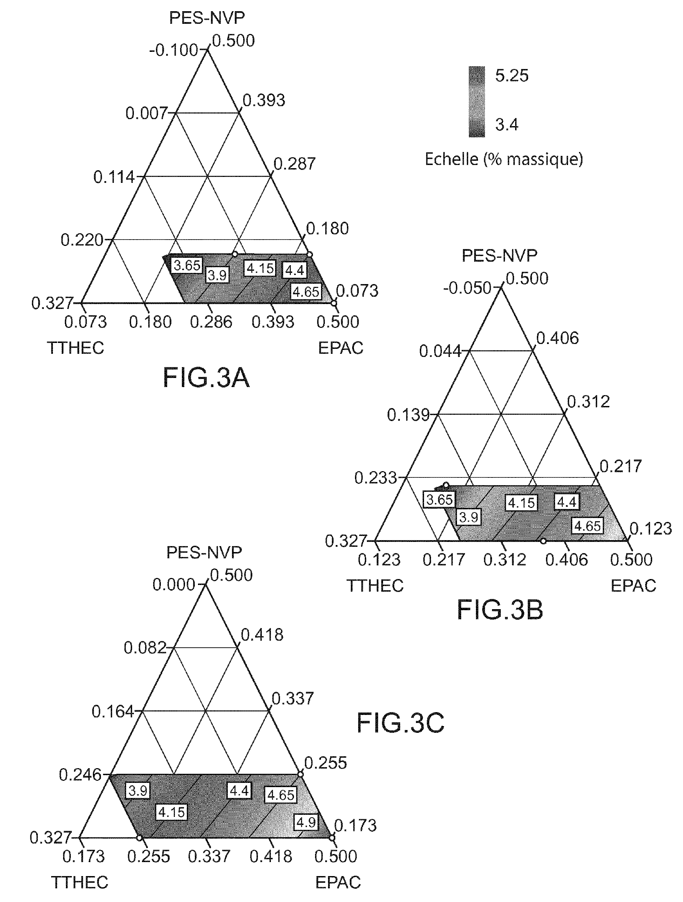

Les figures 3A, 3B et 3C montrent les projections, à fraction massique en DTCD fixée, sur des diagrammes ternaires PES-NVP/EPAC/TTHEC de la surface de réponse de la prise de masse relative présentée par des matériaux obtenus à partir de compositions durcissables composées d'un mélange PES/NVP/EPAC/TTHEC/DTCD, après immersion pendant 48 heures dans de l'eau chaude ; la figure 3A correspond à une fraction massique en DTCD de 0,10 ; la figure 3B correspond à une fraction massique en DTCD de 0,05 tandis que la figure 3C correspond à une fraction massique en DTCD de 0,00.

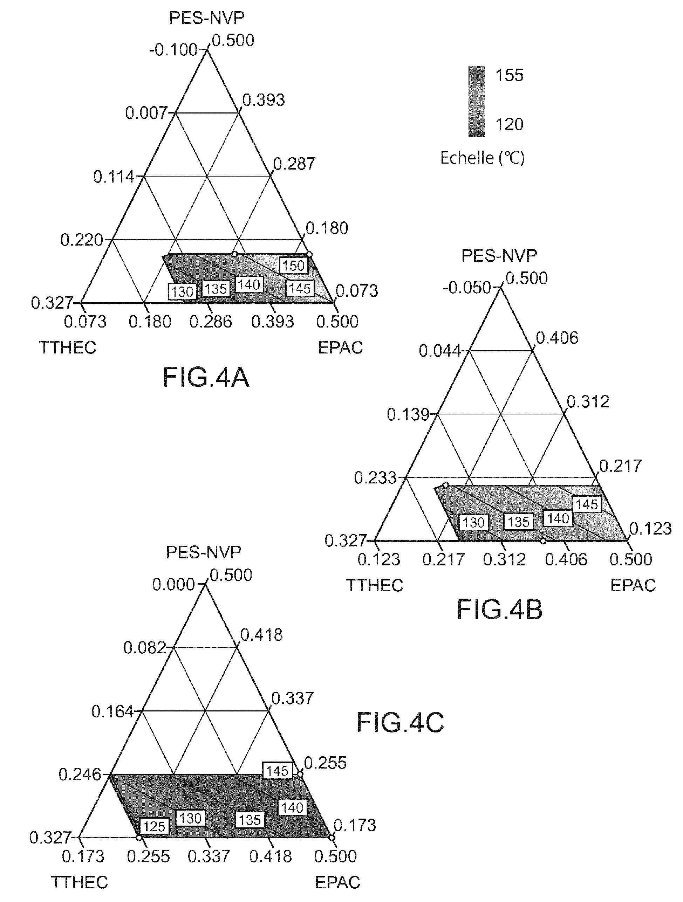

Les figures 4A, 4B et 4C montrent les projections, à fraction massique en DTCD fixée, sur des diagrammes ternaires PES-NVP/EPAC/TTHEC de la surface de réponse de la température de transition vitreuse présentée par des matériaux obtenus à partir de compositions durcissables composées d'un mélange PES/NVP/EPAC/TTHEC/DTCD, après immersion pendant 48 heures dans de l'eau chaude ; la figure 4A correspond à une fraction massique en DTCD de 0,10 ; la figure 4B correspond à une fraction massique en DTCD de 0,05 tandis que la figure 4C correspond à une fraction massique en DTCD de 0,00.

Sur chacune des figures 1A à 4C, les points noirs correspondent à des résultats expérimentaux.

### EXPOSÉ DÉTAILLÉ D'UN MODE DE RÉALISATION PARTICULIER

Vingt compositions, dénommées ci-après compositions **1** à **20**, ont tout d'abord été préparées en utilisant :
- l'EPAC en tant que composé vinylester;
- la PES en tant que polymère thermoplastique polyaromatique sulfoné ;
- la NVP en tant que *N*-vinyl lactame ;
- le TTHEC en tant que composé 1; et
- le DTCD en tant que composé 2.

Ces compositions ont été préparées en dissolvant tout d'abord la PES dans la NVP, dans un rapport massique NVP/PES de 1,575, à une température de 70°C environ et sous agitation mécanique constante.

Puis, au mélange PES-NVP ainsi obtenu, chauffé à 50°C, ont été ajoutés successivement le TTHEC, le DTCD et l'EPAC.

Le tableau I ci-après présente les fractions massiques en EPAC, en mélange PES-NVP, en TTHEC et en DTCD utilisées pour chacune des compositions **1** à **20**.

**Tableau I**

| **Compositions** | **Constituants** | | | |
|---|---|---|---|---|
| | **EPAC** | **PES-NVP** | **TTHEC** | **DTCD** |
| **1** | 0,273 | 0,245 | 0,383 | 0,100 |
| **2** | 0,155 | 0,245 | 0,500 | 0,100 |
| **3** | 0,287 | 0,262 | 0,426 | 0,025 |
| **4** | 0,423 | 0,327 | 0,250 | -- |
| **5** | 0,248 | 0,327 | 0,375 | 0,050 |
| **6** | 0,440 | 0,245 | 0,265 | 0,050 |
| **7** | 0,173 | 0,327 | 0,500 | -- |
| **8** | 0,073 | 0,327 | 0,500 | 0,100 |
| **9** | 0,255 | 0,245 | 0,500 | -- |
| **10** | 0,368 | 0,279 | 0,353 | -- |
| **11** | 0,346 | 0,303 | 0,301 | 0,050 |
| **12** | 0,164 | 0,286 | 0,500 | 0,050 |
| **13** | 0,500 | 0,250 | 0,250 | -- |
| **14** | 0,073 | 0,327 | 0,500 | 0,100 |
| **15** | 0,362 | 0,289 | 0,250 | 0,100 |
| **16** | 0,362 | 0,289 | 0,250 | 0,100 |
| **17** | 0,255 | 0,245 | 0,500 | -- |
| **18** | 0,173 | 0,327 | 0,500 | -- |
| **19** | 0,196 | 0,303 | 0,426 | 0,075 |
| **20** | 0,423 | 0,327 | 0,250 | -- |

Puis, les compositions **1** à **20** ont été coulées dans des moules en acier mesurant 200 mm de côté et 5 mm de hauteur, dégazées sous vide pour éliminer l'air emprisonné lors de la coulée puis polymérisées/réticulées par ionisation sous faisceau d'électrons (Accélérateur CIRCE II - 10 MeV - de la société LINAC Technologies) à des doses de 230 kGy (1 passage de 10 kGy, suivi d'un passage de 20 kGy puis de 4 passages de 50 kGy).

Les matériaux ainsi obtenus ont été soumis à des tests pour déterminer leur ténacité, leur température de transition vitreuse, leur hygroscopicité et apprécier leur tenue au vieillissement en milieu humide.

### Ténacité :

La ténacité quantifiée par la détermination du facteur d'intensité de contrainte critique, noté K_{lc}, des matériaux a été déterminée par des essais qui ont été réalisés conformément à la norme ISO 13586:2000 qui fixe les modalités des essais de ténacité des matériaux plastiques suivant le mode d'ouverture de la fissure (mode I).

Cette norme prévoyant deux types d'essais, à savoir des essais de flexion trois points et des essais de traction, les tests de ténacité ont été réalisés par des essais de flexion trois points en raison d'une plus grande facilité d'usinage des éprouvettes.

Ces essais de flexion trois points ont été effectués comme décrit dans la demande européenne publiée sous le numéro 1473 325 (référence **[3]**).

### Température de transition vitreuse :

La température de transition vitreuse, notée Tg, a été déterminée par des analyses thermo-mécaniques dynamiques (DMA), cette technique présentant, en effet, l'avantage de ne soumettre les matériaux analysés qu'à de très faibles déformations et, partant, de ne pas en modifier la structure.

Les analyses DMA ont été effectuées au moyen d'un appareil Q800 de la société TA Instruments, en mode flexion doublement encastrée en utilisant les conditions opératoires suivantes: fréquence de sollicitation : 1 Hz ; amplitude de sollicitation : 30 µm ; plage de températures : de 25 à 300°C avec une rampe de 3°C/min.

### Hygroscopicité :

L'hygroscopicité des matériaux a été déterminée en immergeant ces matériaux pendant 48 heures dans de l'eau maintenue à 80°C et en calculant la prise de masse relative des matériaux consécutive à cette immersion.

Cette prise de masse relative, notée PMR, est égale au rapport (m₄₈ - m₀)/m₀ dans lequel m₄₈ est la masse présentée par un matériau après immersion dans l'eau tandis que m₀ est la masse de ce même matériau avant immersion dans l'eau.

### Tenue au vieillissement en milieu humide :

La tenue au vieillissement en milieu humide des matériaux a été appréciée en déterminant la température de transition vitreuse des matériaux ayant été immergés pendant 48 heures dans de l'eau. Cette température de transition vitreuse est notée Tg humide.

Elle a été déterminée par des analyses DMA qui ont été effectuées avec le même appareillage et dans les mêmes conditions que ceux utilisés pour la mesure de Tg.

### Résultats :

Les résultats des tests sont présentés dans le tableau II ci-après.

**Tableau II**

| **Compositions** | **Propriétés des matériaux obtenus** | | | |
|---|---|---|---|---|
| | **K_{lc}** (MPa.m^{1/2}) | **Tg** (°C) | **PMR** (% massiques) | **Tg humide** (°C) |
| **1** | 0,92 | 193,80 | 4,23 | 138,31 |
| **2** | 1,16 | 201,92 | 4,35 | 154,71 |
| **3** | -- | 189,36 | 4,38 | 139,47 |
| **4** | 1,52 | 177,57 | 4,01 | 118,88 |
| **5** | 1,30 | 195,44 | 4,65 | 137,69 |
| **6** | -- | 175,67 | 3,39 | -- |
| **7** | 1,31 | 202,40 | 5,26 | 139,44 |
| **8** | -- | 214,69 | 4,46 | -- |
| **9** | -- | 191,17 | 4,52 | -- |
| **10** | 1,58 | 185,89 | 3,32 | 133,81 |
| **11** | 1,21 | 186,12 | -- | -- |
| **12** | -- | 197,92 | -- | -- |
| **13** | -- | 167,88 | -- | -- |
| **14** | -- | 208,18 | -- | -- |
| **15** | -- | 180,59 | -- | -- |
| **16** | -- | 181,56 | -- | -- |
| **17** | -- | 187,64 | -- | -- |
| **18** | -- | 199,97 | -- | -- |
| **19** | -- | 198,79 | -- | -- |
| **20** | -- | 177,93 | -- | -- |

Ces résultats expérimentaux ont permis d'établir, en fixant la fraction massique en DTCD (cette fraction massique ne variant, en effet, qu'entre 0,00 et 0,10), les projections montrées sur les figures 1A à 4C, dans lesquelles :
- les figures 1A à 1C correspondent aux projections de la surface de réponse du K_{lc} ;
- les figures 2A à 2C correspondent aux projections de la surface de réponse de la Tg ;
- les figures 3A à 3C correspondent aux projections de la surface de réponse de la PMR ; tandis que
- les figures 4A à 4C correspondent aux projections de la surface de réponse de la Tg humide.

Ces projections ont, à leur tour, permis d'apprécier de façon qualitative l'influence de chaque constituant sur chacune des propriétés étudiées, comme rapporté dans le tableau III ci-après.

**Tableau III**

| **Propriétés** | **Constituants** | | | |
|---|---|---|---|---|
| | **EPAC** | **PES-NVP** | **TTHEC** | **DTCD** |
| **K_{lc}** | **+** | **++** | **-** | **--** |
| **Tg** | **--** | **+** | **++** | **+** |
| **PMR** | **+** | **--** | **-** | **++** |
| **Tg humide** | **+** | **--** | **+** | **-** |

Il ressort de ce tableau que :
- l'EPAC contribue modérément à la ténacité des matériaux, joue défavorablement sur leur température de transition vitreuse mais a, par contre, une action favorable sur leurs propriétés en conditions humides ;
- le mélange PES-NVP a une action favorable sur la ténacité et la température de transition vitreuse des matériaux (avant immersion dans de l'eau chaude) mais est responsable d'une dégradation de leurs propriétés en conditions humides (PMR et Tg humide), ce qui n'est pas vraiment surprenant compte tenu de l'hydrophilie de la NVP;
- le TTHEC améliore sensiblement la température de transition vitreuse mais contribue à la reprise hydrique ; tandis que
- le DTCD a une action défavorable sur la ténacité mais améliore la température de transition vitreuse et, surtout, limite fortement la reprise hydrique.

Sur la base de ces éléments, il a pu être défini, à l'aide du logiciel Design-Expert™ V7.1.5 distribué par la société Stat-Ease, une composition durcissable propre à conduire, après durcissement, à un matériau au comportement optimisé, c'est-à-dire à un matériau répondant aux objectifs suivants :
- un K_{lc} allant de 1,2 à 1,6 MPa.m^{1/2} ;
- une Tg allant de 170 à 215°C ;
- une PMR allant de 3,4 à 4,5% massiques ; et
- une Tg humide allant de 130 à 155°C.

Cette composition durcissable présente la composition qualitative et quantitative suivante, exprimée en fractions massiques :
- EPAC : 0,330 (soit 33,0% massiques) ;
- PES : 0,097 (soit 9,70% massiques) ;
- NVP : 0,153 (soit 15,3% massiques) ;
- TTHEC : 0,400 (soit 40,0% massiques) ; et
- DTCD : 0,023 (soit 23,0% massiques) ;
et conduit, après durcissement, à un matériau qui présente un K_{lc} de 1,44 ± 0,21 MPa.m^{1/2}, une Tg de 184 ± 3°C, une PMR de 4,2 ± 0,3 massiques et une Tg humide de 138 ± 5°C.

Ces valeurs de K_{lc}, de Tg, de PMR et de Tg humide répondent bien aux objectifs recherchés

Par ailleurs, cette composition durcissable présente une viscosité légèrement inférieure à 100 Pa.s à 25°C, qui la rend apte à être utilisée dans de nombreuses techniques de mise en oeuvre des matériaux composites, y compris les techniques impliquant une opération d'injection comme le moulage par injection simultanée ou le moulage par injection basse pression.

### RÉFÉRENCES CITÉES

**[1]** WO-A-2011/042554
**[2]** « Résines vinylesters », Techniques de l'Ingénieur, Traité Plastiques et Composites, volume AM 3450
**[3]** EP-A-1473 325

## Revendications

1. Composition durcissable, comprenant un composé polymérisable vinylester, conjointement avec un polymère thermoplastique polyaromatique sulfoné et un *N*-vinyl lactame, **caractérisée en ce qu'**elle comprend de plus :
- un premier composé polymérisable non vinylester qui comprend au moins un groupe isocyanurate porteur d'au moins deux groupes (méth)acrylate ; et
- un deuxième composé polymérisable non vinylester qui comprend au moins un groupe carbopolycyclique ou hétéropolycyclique porteur d'au moins deux groupes (méth)acrylate.

2. Composition durcissable selon la revendication 1, **caractérisée en ce que** le composé polymérisable vinylester est choisi parmi les résines vinylesters de bisphénol A, les résines vinylesters de bisphénol A halogénés, les résines vinylesters novolaques, et les résines vinylesters comprenant à la fois des motifs bisphénolique A et des motifs novolaque.

3. Composition durcissable selon la revendication 2, **caractérisée en ce que** le composé polymérisable vinylester est un monomère diacrylate de bisphénol A époxydé de formule (I) ci-après : 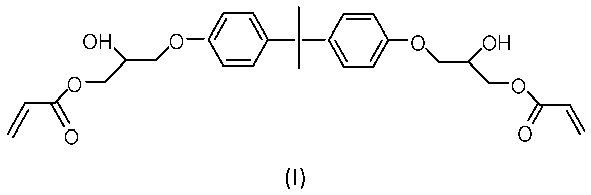 ou un oligomère ou un prépolymère résultant d'une polymérisation de ce monomère, ou encore un mélange de ceux-ci.

4. Composition durcissable selon l'une quelconque des revendications précédentes, **caractérisée en ce que** le polymère thermoplastique polyaromatique sulfoné est une polysulfone.

5. Composition durcissable selon la revendication 4, **caractérisée en ce que** la polysulfone est une polyéthersulfone.

6. Composition durcissable selon l'une quelconque des revendications précédentes, **caractérisée en ce que** le *N*-vinyl lactame est choisi parmi la N-vinyl-2-pyrrolidone, la *N*-vinyl-2-pipéridone et le *N*-vinyl caprolactame.

7. Composition durcissable selon la revendication 6, **caractérisée en ce que** le *N*-vinyl lactame est la *N*-vinyl-2-pyrrolidone.

8. Composition durcissable selon l'une quelconque des revendications précédentes, **caractérisée en ce que** le premier composé polymérisable non vinylester est le monomère de formule (II) ci-après : 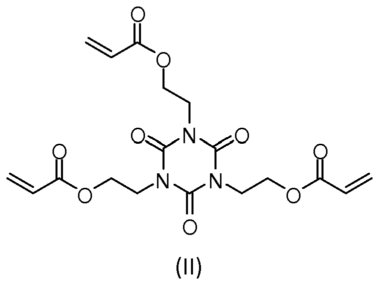 ou un oligomère ou un prépolymère résultant d'une polymérisation de ce monomère, ou encore un mélange de ceux-ci.

9. Composition durcissable selon l'une quelconque des revendications précédentes, **caractérisée en ce que** le deuxième composé polymérisable non vinylester est un monomère de formule (III) ci-après : 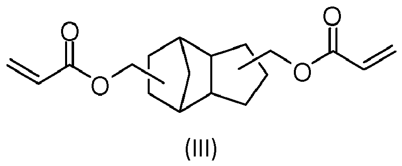 ou un oligomère ou un prépolymère résultant d'une polymérisation de ce monomère, ou encore un mélange de ceux-ci.

10. Composition durcissable selon l'une quelconque des revendications précédentes, **caractérisée en ce qu'**elle présente la formulation qualitative et quantitative suivante, exprimée en pourcentages massiques :
- 33 ± 5% d'un monomère diacrylate de bisphénol A époxydé de formule (I) ci-après : 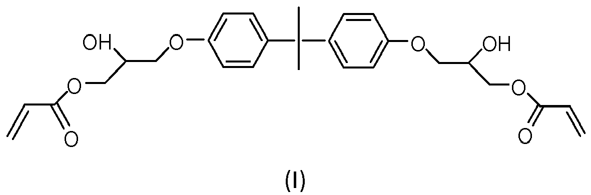 ou d'un oligomère ou d'un prépolymère résultant d'une polymérisation de ce monomère, ou encore d'un mélange de ceux-ci ;
- 10 ± 3% d'une polyéthersulfone ;
- 15 ± 3% de *N*-vinyl-2-pyrrolidone ;
- 40 ± 5% du monomère de formule (II) ci-après : 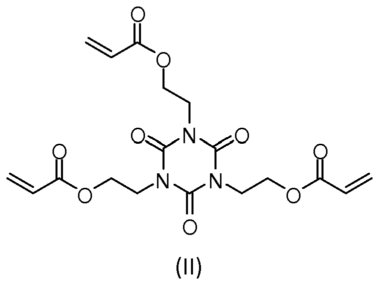 ou d'un oligomère ou d'un prépolymère résultant d'une polymérisation de ce monomère, ou encore d'un mélange de ceux-ci ; et
- 2 ± 1,5% du monomère de formule (III) ci-après : 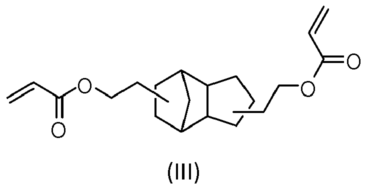 ou d'un oligomère ou d'un prépolymère résultant d'une polymérisation de ce monomère, ou encore d'un mélange de ceux-ci.

11. Composition durcissable selon la revendication 10, **caractérisée en ce qu'**elle présente la formulation qualitative et quantitative suivante, exprimée en pourcentages massiques :
- 33 ± 1% du monomère diacrylate de bisphénol A époxydé de formule (I) ou d'un oligomère ou d'un prépolymère résultant d'une polymérisation de ce monomère, ou encore d'un mélange de ceux-ci ;
- 10 ± 1% d'une polyéthersulfone ;
- 15 ± 1% de *N*-vinyl-2-pyrrolidone ;
- 40 ± 1% du monomère de formule (II) ou d'un oligomère ou d'un prépolymère résultant d'une polymérisation de ce monomère, ou encore d'un mélange de ceux-ci ; et
- 2 ± 1% du monomère de formule (III) ou d'un oligomère ou d'un prépolymère résultant d'une polymérisation de ce monomère, ou encore d'un mélange de ceux-ci.

12. Matériau, **caractérisé en ce qu'**il est obtenu par durcissement d'une composition durcissable telle que définie dans l'une quelconque des revendications 1 à 11.

13. Matériau selon la revendication 12, **caractérisé en ce qu'**il est un adhésif assurant l'assemblage de pièces entre elles, notamment de pièces en matériau(x) composite(s).

14. Matériau selon la revendication 12, **caractérisé en ce qu'**il est la matrice d'un matériau composite du type comprenant une matrice dans laquelle se trouve un renfort.

15. Matériau composite, comprenant une matrice dans laquelle se trouve un renfort, **caractérisé en ce que** la matrice est obtenue par durcissement d'une composition durcissable telle que définie dans l'une quelconque des revendications 1 à 11.

## Patentansprüche

1. Härtbare Zusammensetzung, aufweisend eine polymerisierbare Vinylester-Verbindung, zusammen mit einem sulfonierten polyaromatischen thermoplastischen Polymer und einem *N*-Vinyl-lactam, **dadurch gekennzeichnet, dass** sie außerdem aufweist:
eine erste polymerisierbare Nicht-Vinylester-Verbindung, die mindestens eine Isocyanurat-Gruppe aufweist, welche mindestens zwei (Meth)Acrylat-Gruppen trägt; und
eine zweite polymerisierbare Nicht-Vinylester-Verbindung, die mindestens eine carbopolyzyklische oder heteropolyzyklische Gruppe aufweist, welche mindestens zwei (Meth)Acrylat-Gruppen trägt.

2. Härtbare Zusammensetzung nach Anspruch 1, **dadurch gekennzeichnet, dass** die polymerisierbare Vinylester-Verbindung gewählt ist aus: Vinylesterharzen von Bisphenol A, halogenierten Vinylesterharzen von Bisphenol A, Novolak-Vinylesterharzen, und Vinylesterharzen, die gleichzeitig Einheiten von Bisphenol A und Einheiten von Novolak aufweisen.

3. Härtbare Zusammensetzung nach Anspruch 2, **dadurch gekennzeichnet, dass** die polymerisierbare Vinylesterverbindung ein Diacrylat-Monomer von epoxidiertem Bisphenol A mit der nachfolgenden Formel (I) ist: 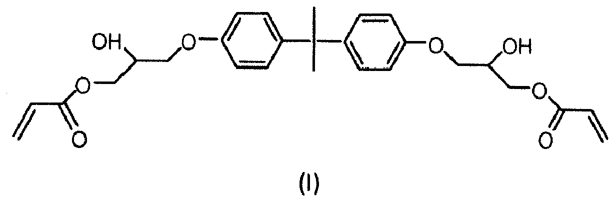 oder ein Oligomer oder ein Präpolymer, das aus einer Polymerisation dieses Monomers resultiert, oder auch ein Gemisch aus diesen.

4. Härtbare Zusammensetzung nach einem der vorhergehenden Ansprüche, **dadurch gekennzeichnet, dass** das sulfonierte polyaromatische thermoplastische Polymer ein Polysulfon ist.

5. Härtbare Zusammensetzung nach Anspruch 4, **dadurch gekennzeichnet, dass** das Polysulfon ein Polyethersulfon ist.

6. Härtbare Zusammensetzung nach einem der vorhergehenden Ansprüche, **dadurch gekennzeichnet, dass** das *N*-Vinyl-lactam gewählt ist aus: *N*-Vinyl-2-pyrrolidon, *N*-Vinyl-2-piperidon und *N*-Vinyl-caprolactam.

7. Härtbare Zusammensetzung nach Anspruch 6, **dadurch gekennzeichnet, dass** es sich bei dem *N*-Vinyl-lactam um *N*-Vinyl-2-pyrrolidon handelt.

8. Härtbare Zusammensetzung nach einem der vorhergehenden Ansprüche, **dadurch gekennzeichnet, dass** die erste polymerisierbare Nicht-Vinylester-Verbindung ein Monomer mit der folgenden Formel (II) ist: 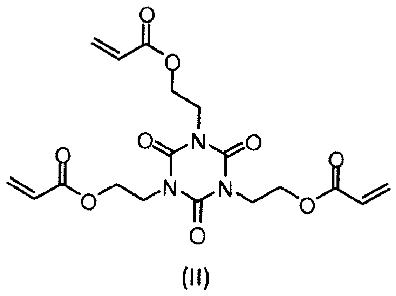 oder ein Oligomer oder ein Präpolymer, das aus einer Polymerisation dieses Monomers resultiert, oder auch ein Gemisch aus diesen.

9. Härtbare Zusammensetzung nach einem der vorhergehenden Ansprüche, **dadurch gekennzeichnet, dass** die zweite polymerisierbare Nicht-Vinylester-Verbindung ein Monomer mit der folgenden Formel (III) ist: 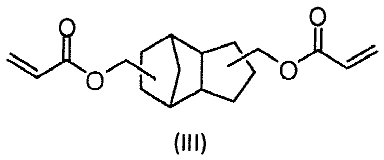 oder ein Oligomer oder ein Präpolymer, das aus einer Polymerisation dieses Monomers resultiert, oder auch ein Gemisch aus diesen.

10. Härtbare Zusammensetzung nach einem der vorhergehenden Ansprüche, **dadurch gekennzeichnet, dass** sie die folgende qualitative und quantitative Formulierung, ausgedrückt in Massen-%, aufweist:
33 ± 5% eines Diacrylat-Monomers von epoxidiertem Bisphenol A der folgenden Formel (I): 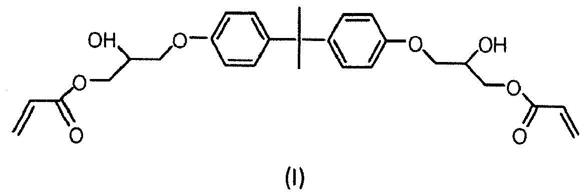 oder eines Oligomers oder eines Präpolymers, das aus einer Polymerisation dieses Monomers resultiert, oder auch eines Gemisches aus diesen;
10 ± 3% eines Polyethersulfons;
15 ± 3% von N-Vinyl-2-pyrrolidon;
40 ± 5% eines Monomers der folgenden Formel (II): 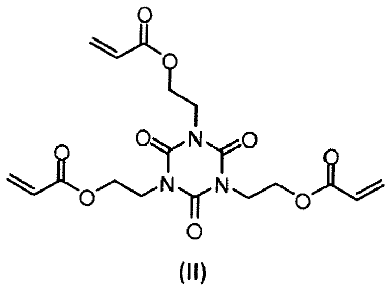 oder eines Oligomers oder eines Präpolymers, das aus einer Polymerisation dieses Monomers resultiert, oder auch eines Gemisches aus diesen; und
2 ± 1,5% eines Monomers der folgenden Formel (III): 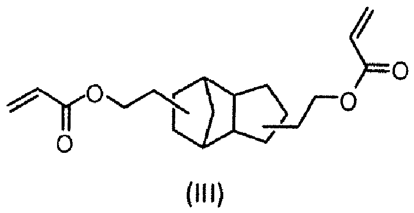 oder eines Oligomers oder eines Präpolymers, das aus einer Polymerisation dieses Monomers resultiert, oder auch eines Gemisches aus diesen.

11. Härtbare Zusammensetzung nach Anspruch 10, **dadurch gekennzeichnet, dass** sie die folgende qualitative und quantitative Formulierung, ausgedrückt in Massen-%, aufweist:
33 ± 1% eines Diacrylat-Monomers von epoxidiertem Bisphenol A der Formel (I) oder eines Oligomers oder eines Präpolymers, das aus einer Polymerisation dieses Monomers resultiert, oder auch eines Gemisches aus diesen;
10 ± 1% eines Polyethersulfons;
15 ± 1% von *N*-Vinyl-2-pyrrolidon;
40 ± 1% eines Monomers der Formel (II) oder eines Oligomers oder eines Präpolymers, das aus einer Polymerisation dieses Monomers resultiert, oder auch eines Gemisches aus diesen; und
2 ± 1% eines Monomers der Formel (III) oder eines Oligomers oder eines Präpolymers, das aus einer Polymerisation dieses Monomers resultiert, oder auch eines Gemisches aus diesen.

12. Material, **dadurch gekennzeichnet, dass** es durch Härten einer härtbaren Zusammensetzung erzielt wird, die derart beschaffen ist, wie in einem der Ansprüche 1 bis 11 definiert.

13. Material nach Anspruch 12, **dadurch gekennzeichnet, dass** es sich um einen Klebstoff handelt, der für das Zusammenbauen von Teilen untereinander sorgt, insbesondere von Teilen aus Verbundmaterial(ien).

14. Material nach Anspruch 12, **dadurch gekennzeichnet, dass** es sich um die Matrix eines Verbundmaterials des Typs handelt, der eine Matrix aufweist, in der sich eine Verstärkung befindet.

15. Verbundmaterial, das eine Matrix aufweist, in der sich eine Verstärkung befindet, **dadurch gekennzeichnet, dass** die Matrix durch Härten einer härtbaren Zusammensetzung erzielt wird, die derart beschaffen ist, wie in einem der Ansprüche 1 bis 11 definiert.

## Claims

1. Curable composition, comprising a vinylester polymerisable compound, jointly with a sulphonated polyaromatic thermoplastic polymer and an *N*-vinyl lactam, **characterised in that** it further comprises:
- a first non-vinylester polymerisable compound which comprises at least one isocyanurate group bearing a at least two (meth)acrylate groups; and
- a second non-vinylester polymerisable compound which comprises at least one carbopolycyclic or heteropolycyclic group bearing at least two (meth)acrylate groups.

2. Curable compound according to claim 1, **characterised in that** the vinylester polymerisable compound is chosen from among the bisphenol A vinylester resins, the halogenated bisphenol A vinylester resins, the novolac vinylester resins, and the vinylester resins comprising at once bisphenolic A units and novolac units.

3. Curable composition according to claim 2, **characterised in that** the vinylester polymerisable compound is an epoxidised bisphenol A diacrylate monomer of formula below (I): 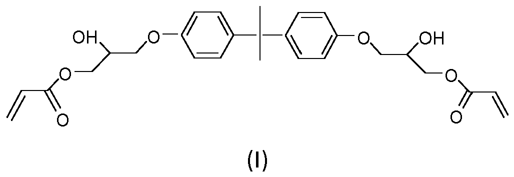 or an oligomer or a prepolymer resulting from a polymerisation of this monomer, or again a blend thereof.

4. Curable compound according to any one of the previous claims, **characterised in that** the sulphonated polyaromatic thermoplastic polymer is a polysulfone.

5. Curable composition according to claim 4, **characterised in that** the polysulfone is a polyethersulfone.

6. Curable composition according to any one of the previous claims, **characterised in that** the *N*-vinyl lactam is chosen from among *N*-vinyl-2-pyrrolidone, *N*-vinyl-2-piperidone and *N*-vinyl caprolactam.

7. Curable compound according to claim 6, **characterised in that** the N-vinyl lactam is *N*-vinyl-2-pyrrolidone.

8. Curable compound according to any one of the previous claims, **characterised in that** the first non-vinylester polymerisable compound is a monomer of formula (II) below: 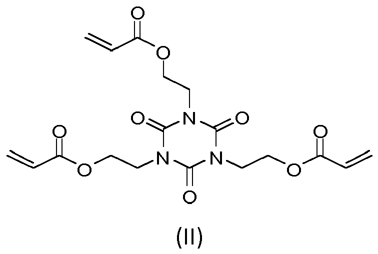 or an oligomer or a prepolymer resulting from a polymerisation of this monomer, or again a blend thereof.

9. Curable compound according to any one of the previous claims, **characterised in that** the second non-vinylester polymerisable compound is a monomer of formula (III) below: 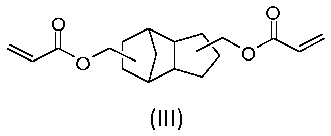 or an oligomer or a prepolymer resulting from a polymerisation of this monomer, or again a blend thereof.

10. Curable composition according to any one of the previous claims, **characterised in that** it has the following qualitative and quantitative formulation, expressed as mass percentages:
- 33 ± 5% of an epoxidised bisphenol A diacrylate monomer of formula (I) below: 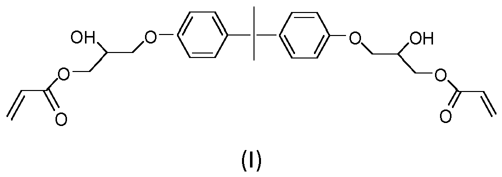 or of an oligomer or of a prepolymer resulting from a polymerisation of this monomer, or again a blend thereof;
- 10 ± 3% of a polyethersulfone;
- 15 ± 3% of *N*-vinyl-2-pyrrolidone;
- 40 ± 5% of a monomer of formula (II) below: 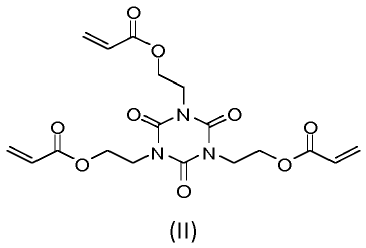 or of an oligomer or of a prepolymer resulting from a polymerisation of this monomer, or again a blend thereof; and
- 2 ± 1.5% of a monomer of formula (III) below: 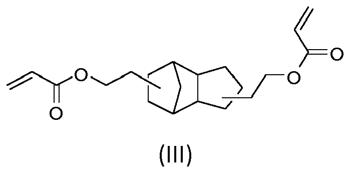 or of an oligomer or of a prepolymer resulting from a polymerisation of this monomer, or again a blend thereof.

11. Curable composition according to claim 10, **characterised in that** it has the following qualitative and quantitative formulation, expressed as mass percentages:
- 33 ± 1% of the epoxidised bisphenol A diacrylate monomer of formula (I) above, or of an oligomer or of a prepolymer resulting from a polymerisation of this monomer, or again of a blend thereof;
- 10 ± 1% of a polyethersulfone;
- 15 ± 1% of *N*-vinyl-2-pyrrolidone;
- 40 ± 1% of the monomer of formula (II) above, or of an oligomer or of a prepolymer resulting from a polymerisation of this monomer, or again of a blend thereof; and
- 2 ± 1% of the monomer of formula (III) above, or of an oligomer or of a prepolymer resulting from a polymerisation of this monomer, or again of a blend thereof.

12. Material, **characterised in that** it is obtained by curing a curable composition as defined in any one of claims 1 to 11.

13. Material according to claim 12, **characterised in that** it is an adhesive enabling parts to be assembled with one another, and in particular parts made of composite material(s).

14. Material according to claim 12, **characterised in that** it is the matrix of a composite material of the type comprising a matrix in which a reinforcement is contained.

15. Composite material, comprising a matrix in which a reinforcement is contained, **characterised in that** the matrix is obtained by curing a curable composition as defined in any one of claims 1 to 11.
